# EUROPÄISCHE PATENTANMELDUNG

(11) **EP 0 978 710 A2**
(43) Veröffentlichungstag der Anmeldung: **09.02.2000**
(21) Anmeldenummer: 99114330.6
(22) Anmeldetag: 21.07.1999
(51) Int. Cl.: G01G 11/06

(54) **Verfahren zur flächendeckenden Messung der Wandstärke eines aus lichtdurchlässigem Material hergestellten Hohlkörpers**

(30) Priorität: 07.08.1998 AT 137098
(71) Anmelder: FRIES PLANUNGS- UND MARKETINGGESELLSCHAFT m.b.H., 6832 Sulz (AT)
(72) Erfinder: Johler, Edmund, Ing., 6861 Alberschwende (AT); Revesz, Alexander, Dipl.-Ing, 1210 Wien (AT); Wilhelm, Harald, Dipl.-Ing., 1090 Wien (AT)
(74) Vertreter: Hefel, Herbert, Dipl.-Ing.

(57) **Zusammenfassung**

Das Verfahren dient zur insbesondere flächendeckenden Messung oder Prüfung der Beschaffenheit, beispielsweise der Wandstärke oder der Oberflächengüte eines aus lichtdurchlässigem Material hergestellten Hohlkörpers (1), beispielsweise eines durch Blasen hergestellten Kunststoffasses oder Kunststoffkanisters. In das Innere des Hohlkörpers (1) wird ein Strahler (2) eingebracht und außerhalb des Hohlkörpers (1) wird ein die von seiner Wand durchgelassene Strahlung aufnehmender Empfänger (4) angeordnet. Während der Durchführung des flächendeckenden Meßvorganges werden der Hohlkörper (1) und/oder der Empfänger (4) in zueinander unterschiedliche Lagen gebracht. In den verschiedenen Lagen von Empfänger (4) und Hohlkörper (1) zueinander fertigt der Empfänger (4) jeweils mehrere elektronische, digitale oder analoge Aufnahmen des Hohlkörpers (1) an. Diese in einer jeweiligen Lage gemachten Aufnahmen werden elektronisch zu je einem Mittelwert-Summenbild (Σ6) überlagert. Das so ermittelte Mittelwert-Summenbild (Σ6) wird mit je einem Referenzbild (7) verglichen, wobei als Referenzbild (7) ein errechnetes Mittelwertbild verwendet wird. Die dabei zwischen errechnetem Mittelwertbild (7) und aufgenommenem Mittelwert-Summenbild (Σ6) vorliegenden Abweichungen werden zur Beurteilung der Beschaffenheit (Qualität) des geprüften Hohlkörpers (1) verwendet.

## Beschreibung

Die Erfindung bezieht sich auf ein Verfahren zur insbesondere flächendeckenden Messung oder Prüfung der Beschaffenheit, beispielsweise der Wandstärke oder der Oberflächengüte eines aus lichtdurchlässigem Material hergestellten Hohlkörpers, beispielsweise eines durch Blasen hergestellten Kunstatoffasses oder Kunststoffkanisters, wobei in das Innere des Hohlkörpers ein Strahler eingebracht wird und außerhalb des Hohlkörpers ein die von seiner Wand durchgelassene Strahlung aufnehmender Empfänger angeordnet wird.

Es ist aus der EP 0 320 139 A2 bekannt, die Wandstärke von Gegenständen aus transparentem Material dadurch zu messen und zu prüfen, daß schräg gegen die Oberfläche des Gegenstandes ein Laserstrahl gerichtet wird. Dieser Laserstrahl wird zum Teil an der Oberfläche des Gegenstandes reflektiert, zum Teil dringt der Laserstrahl in das Material ein und wird erst an der inneren Begrenzungsfläche zurückgeworfen. In Abhängigkeit der Wandstärke ist der gegenseitige Abstand dieser beiden reflektierten Strahlen unterschiedlich. Die Größe dieses Abstandes ist proportional zur gemessenen Wandstärke. Diese Messung ist nur punktweise durchzuführen und setzt transparente Materialien voraus.

Es ist weiter bekannt, und zwar aus der DE 29 38 243 A 1, die Dicke einer durch Extrusionsblasen hergestellten Kunststoffolie im Bereich der Folienblase zu messen. Hiefür wird ein Ultrarotstrahler eingesetzt und ein Empfänger für diese Strahlung. Der Strahler ist innerhalb der Folienblase auf deren Längsachse liegend angeordnet und mit vorbestimmtem Abstand von der Austrittsöffnung der rotierenden oder feststehenden Ringdüse der Extrusionseinrichtung auf der Ringdüse gelagert. Der Strahler ist derart beschaffen, daß die Ultrarotstrahlung in einer zur Längsachse der Folienblase quer verlaufenden Ebene über einen Winkel von 360° gleichmäßig verteilt vom Strahler abgegeben wird. Die Messung beschränkt sich hier jeweils auf eine Ringzone, wobei solche Ringzonen fortlaufend geprüft werden. Diese Art der Prüfung ist auf schlauchförmige Kunststoffolien beschränkt.

Ausgehend von diesem Stand der Technik hat sich die Erfindung zur Aufgabe gestellt, ein Verfahren zu entwickeln, mit welchem die Beschaffenheit, beispielsweise der Wandstärke oder der Oberflächengüte von vorzugsweise im Blasverfahren hergestellten Hohlkörpern im Produktionsablauf geprüft werden kann und dies vorzugsweise flächendeckend, d.h., die möglichst gesamte Oberfläche des Hohlkörpers soll dieser Messung oder Prüfung unterzogen sein. Die Prüfung soll sich möglichst auf die gesamte Oberfläche des Hohlkörpers erstrecken und soll darüberhinaus in einer relativ kurzen Zeitspanne abgewickelt werden, die nicht länger ist als die Arbeitstaktzeit der Produktionsanlage, auf der solche Hohlkörper gefertigt werden, denn eine weitere Aufgabe der Erfindung liegt darin, jeden gefertigten Hohlkörper dieser Prüfung zu unterziehen, damit nur einwandfreie Hohlkörper die Fabrikation verlassen, was insbesondere dann von ausschlaggebender Bedeutung ist, wenn diese Hohlkörper wie Fässer und Kanister zur Aufnahme von gefährlichen Gütern dienen.

Zur Lösung dieser komplexen Aufgabe schlägt die Erfindung vor, daß während der Durchführung des flächendeckenden Meßvorganges der Hohlkörper und/oder der Empfänger in zueinander unterschiedliche Lagen gebracht werden, daß in den verschiedenen Lagen von Empfänger und Hohlkörper zueinander der Empfänger jeweils mehrere elektronische, digitale oder analoge Aufnahmen des Hohlkörpers anfertigt, daß diese in einer jeweiligen Lage gemachten elektronischen, digitalen oder analogen Aufnahmen elektronisch zu je einem Mittelwert-Summenbild überlagert werden und das so ermittelte Mittelwert-Summenbild mit je einem Referenzbild verglichen wird, wobei als Referenzbild ein errechnetes Mittelwertbild verwendet wird und die dabei zwischen errechnetem Mittelwertbild und aufgenommenem Mittelwert-Summenbild vorliegenden Abweichungen zur Beurteilung der Qualität des geprüften Hohlkörpers verwendet werden.

Anhand der Zeichnung wird die Erfindung näher erläutert. Es zeigen:

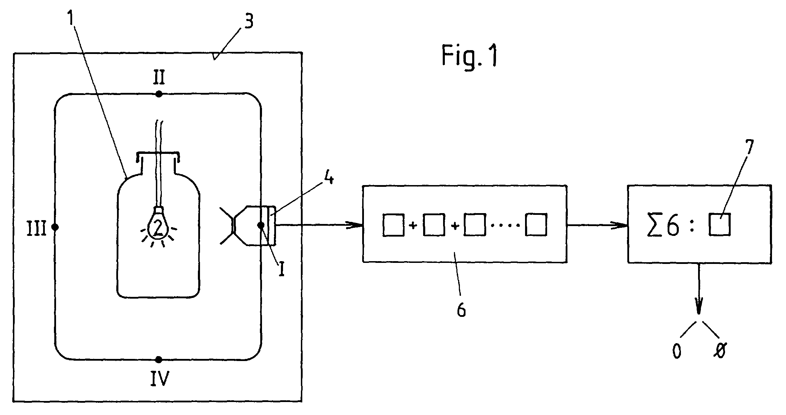

- Fig. 1: eine schematische Darstellung des Verfahrens in Verbindung mit einer Wandstärkemessung;
- Fig. 2: ein Schema zur Erläuterung der Auswertung der aufgenommenen Bilder im Vergleich zum Mittelwert-Summenbild.

Der zu prüfende Hohlkörper 1 (Kunststoffaß, Kunststoffkanister o. dgl.) wird in eine abgedunkelte Kammer 3 eingebracht. Im Hohlkörper 1 befindet sich ein Strahler 2 für sichtbares Licht. Entlang einer Führungsbahn 5, die um den Hohlkörper 1 herumgeführt ist, wird ein Empfänger, der als elektronische Kamera 4 ausgebildet ist, schrittweise bewegt und in verschiedenen Positionen, die hier beispielsweise durch die römischen Zahlen I, II, III und IV angedeutet sind, angehalten. Anstelle einer solchen einzigen umfangsgeschlossenen Führungsbahn 5 können noch weitere Führungsbahnen vorgesehen sein, beispielsweise eine Führungsbahn, deren Ebene rechtwinkelig zur Zeichenebene steht. Es ist aber auch möglich, innerhalb der verdunkelten Kammer 3 mehrere Kameras 4 stationär anzuordnen und den zu prüfenden Hohlkörper nacheinander in den Aufnahmebereich dieser Kameras zu bringen. Als Kameras 4 werden zweckmäßigerweise CCD-Kameras (charge coupled device) eingesetzt.

In jeder der vorstehend bezeichneten Stationen I, II, III und IV, in welchen der Empfänger 4 angehalten wird, wird von diesem Empfänger eine Vielzahl von Aufnahmen 6 des durchstrahlten Hohlkörpers 1 gemacht. Pro Station werden dabei bis zu 64 Einzelbilder angefertigt. Dies deswegen, da die Inhomogenität der Farbverteilung bei eingefärbten Kunststoffmassen die Bildauswertung erschwert. Es ist daher erforderlich, eine geeignete Farbrauschwertunterdrückung durchzuführen, was dadurch geschieht, daß pro Station bis zu 64 Einzelbilder angefertigt werden. Diese elektronischen Aufnahmebilder werden zu einem Mittelwert-Summenbild addiert, das in der schematischen Darstellung als Σ6 angedeutet ist. Dieses elektronisch aufgenommene und summierte Mittelwert-Summenbild Σ6 wird nun einem Referenzbild vergleichend gegenübergestellt. Als Referenzbild 7 dient dabei ein berechnetes Mittelwertbild, das beispielsweise ausgemittelt wurde aus mehreren qualitativ einwandfreien und vergleichbaren Hohlkörpern.

Die elektronische Kamera 4 zerlegt den aufgenommenen Oberflächenabschnitt des Hohlkörpers in mehrere hunderttausend Punkte, die evtl. eine unterschiedliche Helligkeit besitzen. Ebenso besteht das errechnete Referenzbild aus einer gleichen Anzahl von Punkten, die aufgrund der einwandfreien Beschaffenheit des Vergleichkörpers eine vorgegebene Helligkeit besitzen (Soll-Helligkeit). Elektronisch wird dabei die Helligkeit eines jeden aufgenommenen Punktes der Helligkeit eines korrespondierenden Punktes des jeweiligen Referenzbildes vergleichend gegenübergestellt, der Unterschied in der Helligkeit ermittelt und der prozentuelle Anteil der unterschiedlich hellen Punkte errechnet. Beispielsweise besitzen pro Oberflächenabschnitt
X-Punkte eine Helligkeitsabweichung von 0 - 15 %
Y-Punkte eine Helligkeitsabweichung von 15 - 35 %
Z-Punkte eine Helligkeitsabweichung von 35 - 70 %
W-Punkte eine Helligkeitsabweichung von mehr als 70 %.

Softwaremäßig werden nun jene Grenzen festgelegt, innerhalb welcher Bereiche ein qualitativ einwandfreier Hohlkörper vorliegt.

Das Ausmaß der Abweichungen der beiden in Vergleich stehenden Bilder Σ6 und 7 dient somit als Maß für die Qualität der Wandstärke des Hohlkörpers. Dieses Verfahren läßt sich in relativ kurzer Zeit abwickeln, beispielsweise innerhalb von weniger als 60 Sek., dies bei einem Hohlkörper handelsüblicher Größe, so daß dieses erfindungsgemäße Verfahren integriert werden kann in einen Produktionsablauf, da die Taktzeiten des Meßverfahrens und die Taktzeiten des Produktionsablaufes in Übereinstimmung bringbar sind. Dabei wird die Dickenmessung nicht auf einen Punkt oder eine Linie beschränkt, vielmehr wird sie dank des erfindungsgemäßen Vorschlages sozusagen flächendeckend abgewickelt.

Je nach Art der verwendeten Kamera kann die Oberfläche des zu prüfenden Körpers pro Aufnahme abschnittsweise erfaßt werden. Es ist aber auch möglich, die jeweils aufzunehmende Oberfläche in Punktzeilen zu zerlegen.

Um einen maximalen Kontrast und damit eine maximale Auflösung der Wanddickenverteilung zu erhalten, muß der Einfluß der Beleuchtung rechnerisch eliminiert werden. Dafür wird mit einem separaten Simulationsprogramm die Lichtintensitätsverteilung der Beleuchtung errechnet. Diese Intensitätsverteilung wird mit einem Gewichtungsfaktor dem aufgenommenen Bild überlagert. Für die Bestimmung des optimalen Gewichtungsfaktors muß der Lichtintensitätsgradient an der Prüfgutoberfläche (Kanister, Faß) in der Lampenregion ermittelt werden. Dafür sind mehrere Aufnahmen mit unterschiedlicher Lichtstärke erforderlich. Die Lichtstärkenvariationen können durch Überlagerung von unterschiedlich vielen Bildern rechnerisch erfolgen. Es müssen aber von einem Prüfgut mehrere, voneinander unabhängige Bilder aufgenommen werden. Die ausschließliche Berücksichtigung des Rauscheinflusses ist ausreichend, wenn nur Fehlstellen gesucht werden. Die Berücksichtigung des Lampeneinflusses ist jedoch unbedingt notwendig, wenn man die absolute Wanddickenverteilung messen will.

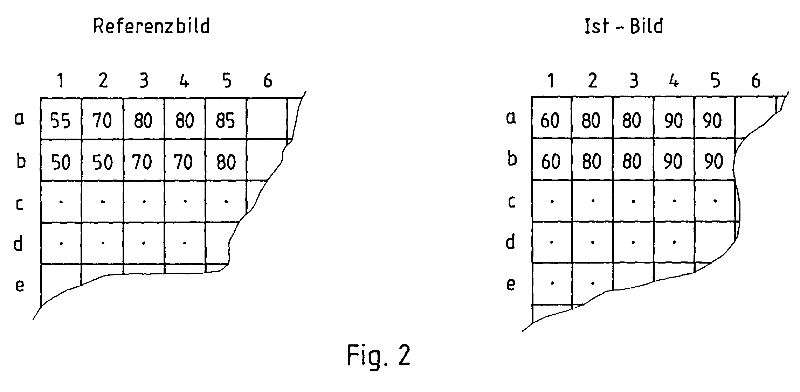

Die Fig. 2 zeigt in Gegenüberstellung links schematisch das errechnete Referenzbild, das aufgrund von Messungen eines einwandfreien Vergleichkörpers ermittelt worden ist. In den einzelnen Feldern (i, j) ist der jeweilige aufsummierte Helligkeitswert HR (i, j) eingetragen. Das rechte Bild ist das aufgenommene Ist-Bild, das Mittelwert-Summenbild, das die aus beispielsweise jeweils 64 Aufnahmen erhaltenen Helligkeitswerte HI (i, j) angibt.

Schwarz entspricht beispielsweise dem Helligkeitswert 0,
Weiß beispielsweise dem Helligkeitswert 255.
HR (i, j) = Helligkeitswert Referenzbild
H I (i, j) = Helligkeitswert Ist-Bild

Die prozentuelle Abweichung für beispielsweise Punkt a1 gemäß Fig. 2 beträgt:
- Referenzbild: HR (a, 1) = 55 entspricht 100%
- Ist-Bild: H I (a, 1) = 60
- Abweichung: A = ((60 - 55)/55) * 100 (%)
A = 9,1 %
- Allgemein:: A = ((HR(i,j) - H I(i,j))/HR(i,j)) * 100 (%)

A > 0 bedeutet Wandstärke dünner als Mittelwert der Referenzkanister
A < 0 bedeutet Wandstärke dicker als Mittelwert der Referenzkanister.

Die erhaltenen Werte bzw. Bilder können unterschiedlich ausgewertet werden:

Die zu beurteilende Oberfläche wird in verschiedene Auswertregionen unterteilt, die alle für sich beurteilt werden. Für diese Auswertregionen wird dann die Anzahl der Punkte für verschiedene Abweichkategorien bestimmt und mit vorgegebenen Grenzwerten verglichen. Oder es wird für eine Auswertregion die Gesamtsumme der Grauwerte überwacht. Die Festlegung der Grenzwerte ist abhängig von unterschiedlichen Kriterien, beispielsweise Behältertyp, Qualtitätsanforderungen an den Behälter, Position der Auswertregion auf der Behälteroberfläche. Es sind beispielsweise im Bereich der Signierung des Behälters (Produktionsjahr und Produktionsmonat; Firmenlogo u.dgl.) andere Grenzen erforderlich wie in bekannt kritischen Bereichen.

Vorstehend wurde die Erfindung beschrieben im Zusammenhang mit der Wandstärkenmessung und einem Strahler, der sichtbares Licht abstrahlt. Anstelle von sichtbarem Licht kann beispielsweise ein Ultraviolett-Strahler eingesetzt werden. Dies vor allem, wenn es sich um die Prüfung der Oberflächenbeschaffenheit handelt, um die Frage, wieweit eventuell aggressives Füllgut die Oberfläche mechanisch angegriffen hat und so Schwachstellen geschaffen wurden.

Handelt es sich um die Prüfung eventueller oxidativer Schäden, so werden zweckmäßigerweise Infrarot-Strahler eingesetzt. Solche oxidative Schäden treten dann auf, wenn Sauerstoff, sei es aus der Luft oder aus dem Füllgut, die molekulare Struktur des verwendeten Kunststoffes schädigt. Auch dadurch können sich gefährliche Schwachstellen bilden, die dann zum Risiko werden, wenn der Behälter zur Aufnahme gefährlicher Güter dient. Die Verwendung von Laserstrahlen sei ebenfalls erwähnt. Wenn ein Strahler seine Energie nicht räumlich abstrahlt, sondern in Form eines gebündelten oder fokussierten Strahles, dann wird während der Prüfer der Strahler bewegt, so daß sein Strahl die zu prüfende Oberfläche überstreicht.

Mit dem erfindungsgemäßen Verfahren werden Hohlkörper der eingangs erwähnten Art möglichst flächendeckend geprüft, d.h., die gesamte Oberfläche des Hohlkörpers wird dieser Prüfung unterzogen. Es liegt im Rahmen der Erfindung, diese Prüfung insoweit einzuschränken, daß nur einzelne Abschnitte oder Flächenbereiche eines Behälters in der beschriebenen Weise geprüft werden. Unabhängig von der Art der eingesetzten Strahler werden die jeweiligen Prüfungen in der Weise abgewickelt, wie dies vorstehend im Zusammenhang mit Strahlern mit sichtbarem Licht beschrieben wurde.

## Patentansprüche

1. Verfahren zur insbesondere flächendeckenden Messung oder Prüfung der Beschaffenheit, beispielsweise der Wandstärke oder der Oberflächengüte eines aus lichtdurchlässigem Material hergestellten Hohlkörpers, beispielsweise eines durch Blasen hergestellten Kunststoffasses oder Kunststoffkanisters, wobei in das Innere des Hohlkörpers ein Strahler eingebracht wird und außerhalb des Hohlkörpers ein die von seiner Wand durchgelassene Strahlung aufnehmender Empfänger angeordnet wird, dadurch gekennzeichnet, daß während der Durchführung des flächendeckenden Meßvorganges der Hohlkörper und/oder der Empfänger in zueinander unterschiedliche Lagen gebracht werden, daß in den verschiedenen Lagen von Empfänger und Hohlkörper zueinander der Empfänger jeweils mehrere elektronische, digitale oder analoge Aufnahmen des Hohlkörpers anfertigt, daß diese in einer jeweiligen Lage gemachten elektronischen, digitalen oder analogen Aufnahmen elektronisch zu je einem Mittelwert-Summenbild überlagert werden und das so ermittelte Mittelwert-Summenbild mit je einem Referenzbild verglichen wird, wobei als Referenzbild ein errechnetes Mittelwertbild verwendet wird und die dabei zwischen errechnetem Mittelwertbild und aufgenommenem Mittelwert-Summenbild vorliegenden Abweichungen zur Beurteilung der Beschaffenheit (Qualität) des geprüften Hohlkörpers verwendet werden.

2. Verfahren nach Anspruch 1, dadurch gekennzeichnet, daß Hohlkörper und Empfänger in eine verdunkelte Kammer eingebracht werden.

3. Verfahren nach Anspruch 1, dadurch gekennzeichnet, daß ein Strahler mit sichtbarem Licht verwendet wird.

4. Verfahren nach Anspruch 1, dadurch gekennzeichnet, daß als Strahler eine Ultraviolett-Lichtquelle verwendet wird.

5. Verfahren nach Anspruch 1, dadurch gekennzeichnet, daß als Strahler eine Infrarot-Lichtquelle verwendet wird.

6. Verfahren nach Anspruch 1, dadurch gekennzeichnet, daß als Strahler eine Laser-Lichtquelle verwendet wird.

7. Verfahren nach Anspruch 1, dadurch gekennzeichnet, daß der Strahler einen gebündelten oder fokussierten Strahl aussendet, und der Strahl über die zu prüfende Oberfläche geführt wird.

8. Verfahren nach Anspruch 1, dadurch gekennzeichnet, daß als Empfänger eine CCD-Kamera verwendet wird.

9. Verfahren nach Anspruch 1, dadurch gekennzeichnet, daß der Empfänger entlang von Schienen und Führungen um den ortsfesten Hohlkärper herumgeführt wird.

10. Verfahren nach Anspruch 1, dadurch gekennzeichnet, daß in der verdunkelten Kammer mehrere ortsfeste Kameras angeordnet sind und der Hohlkörper in den Aufnahmebereich dieser Kameras bewegt wird.
